# EUROPÄISCHE PATENTSCHRIFT

(11) **EP 0 726 192 B1**
(45) Veröffentlichungstag und Bekanntmachung des Hinweises auf die Patenterteilung: **14.04.1999**
(21) Anmeldenummer: 96100237.5
(22) Anmeldetag: 10.01.1996
(51) Int. Cl.: B62D 1/19, F16F 7/12

(54) **Sicherheitssystem für Lenkwellen**
Security system for steering shaft
Système de sécurité pour arbre de direction

(30) Priorität: 08.02.1995 DE 19504036
(43) Veröffentlichungstag der Anmeldung: 14.08.1996
(73) Patentinhaber: LEMFÖRDER METALLWAREN AG., 49441 Lemförde (DE)
(72) Erfinder: Schäfer, Burkhard, Dipl.-Ing., D-27777 Ganderkesee (DE); Grams, Kai Uwe, Dipl.-Ing., D-49692 Cappeln (DE); Szielasko, Olaf, Dipl.-Ing., D-32531 Stemwede (DE)

(56) Entgegenhaltungen:
- EP-A- 0 124 995
- US-A- 3 670 591
- US-A- 3 703 105

## Beschreibung

Die Erfindung bezieht sich auf ein Sicherheitssystem für Lenkwellen, bei dem Wellenteile mit Merkmalen nach dem Oberbegriff des Patentanspruches 1 drehfest ineinandergreifen.

Solche Sicherheitssysteme haben die Aufgabe, Axialkräfte über ein vorbestimmtes Maß hinaus nicht mehr zu übertragen, so daß es an vorgegebener Stelle zu einem Bruch im Strang der Lenkwelle kommt. Vorzugsweise sind solche Sicherheitssysteme in einer Zwischenwelle zwischen dem Lenkgetriebe und dem Bodengelenk einer in der Neigung verstellbaren Lenksäule bzw. der Bodenbefestigung einer festen Lenksäule angeordnet. Bekannt sind einfach teleskopische Zwischenwellen, bei denen ein Wellenteil axial an dem Gehäuse des Lenkgetriebes und das andere Wellenteil axial zum Bodengelenk einer verstellbaren Lenksäule bzw. zur festen Lenksäule festgelegt ist. Die beiden freien Enden der Wellenteile greifen teleskopisch ineinander ein und sind durch ein Axialkräfte übertragendes Sicherungsglied miteinander verbunden.

Aus EP 0 124 995 A1 gebt beispielsweise eine Energie absorbierende Lenksäule für Kraftfahrzeuge mit teleskopierbaren, über Passverbindungen drehfest miteinander verbundenen Wellenteilen hervor. Die Passverbindungen werden durch Sollbruchelemente aus Kunststoff gebildet, die bei einer vorbestimmbaren Krafteinleitung abscheren. Die Wellenteile werden von sich in axialer Richtung überdeckenden Mantelrohren aufgenommen, die im Bereich ihrer Überdeckung ein Energieabsorbtionssystem aufnehmen. Das Energieabsorbtionssystem besteht aus Kugeln zwischen den Mantelrohren, die nach Überschreitung einer höchstzulässigen Axialkraft ein Zusammenschieben relativ zueinander ermöglichen. Die Kugeln arbeiten sich bei dieser Bewegung plastisch in die Mantelrohroberflächen ein.

Zur Übertragung von Axialkräften und als Sicherungsglied dienen häufig Kunststoffabspritzungen bzw. Abspritzungen aus einem anderen verformbaren Abscherwerkstoff, wobei diese Abspritzungen einerseits in Ausnehmungen am Außenumfang des inneren Wellenteils und andererseits in Ausnehmungen am Innenumfang des äußeren Wellenteils eingreifen und letztere ganz oder wenigstens an einigen Stellen bis zur Außenmantelfläche des äußeren Wellenteils durchgeführt sind, um das Einspritzen des Abscherwerkstoffes zu ermöglichen. Insbesondere bei Zwischenwellen kurzer Baulänge ist mit bekannten Ausbildungen auch nur ein relativ kurzer axialer Verschiebeweg zwischen den beiden Wellenteilen möglich, wenn die vorher festgelegte Abscherkraft, beispielsweise im Falle eines Zusammenstoßes des Fahrzeugs mit einem Hindernis, überschritten wird.

Aufgabe der Erfindung ist es, eine Ausbildung eines Sicherheitssystems für Lenkwellen nach dem Oberbegriff des Patentanspruches 1 zu schaffen, um eine erhebliche Vergrößerung des axialen Verschiebeweges der drehfest ineinandergreifenden Wellenteile zu erreichen und dabei ein sogenanntes Fail-Safe-Verhalten sicherzustellen, und um außerdem zu erreichen, daß das Sicherheitssystem auch in der Funktion erhalten bleibt, wenn es unbeabsichtigt zu einem Abscheren der die Wellenteile miteinander verbindenden Abspritzung kommt.

Die Lösung dieser Aufgabe besteht in einer Ausbildung nach dem Kennzeichen des Patentanspruches 1.

Bereits bei einem zweifach teleskopierbaren Wellensystem kann eine erhebliche Verlängerung des sogenannten Crashweges erreicht werden, wobei die erfindungsgemäß vorgesehene Ausbildung sicherstellt, daß die Wellenteile in axialer Richtung auch nach dem Bruch des Abscherwerkstoffes nicht auseinanderfallen können, so daß ein Fail-Safe-Verhalten sichergestellt ist. Eine besondere Problematik stellt bei zweifach teleskopierbaren Wellensystemen das mittlere Wellenteil zwischen den beiden Endwellenteilen dar, welches ohne die erfindungsgemäße Ausbildung nach einem unbeabsichtigten Bruch der Abscherwerkstoffe axial von den Endwellenteilen heruntergleiten könnte, so daß es irgendwann zu einer Unterbrechung des Wellensystemes kommt. Dies wird dadurch verhindert, daß die jeweils inneren Wellenteile in eine radiale Erweiterung des jeweils zugehörigen äußeren Wellenteiles eingreifen, wobei der auf Abscherung im Falle des Überschreitens einer maximalen Axialkraft ausgelegte Querschnitt des Abscherwerkstoffes zwischen den beiden Wellenteilen ebenfalls im Bereich dieser Erweiterung, das heißt also, außerhalb des Außendurchmessers des jeweils inneren Wellenteiles, angeordnet ist.

In Anlehnung an bekannte Ausführungen können die ineinandergreifenden Wellenteile axial mit einem Abstand voneinander mehrere Verbindungen durch Abscherwerkstoffe aufweisen, von denen eine im Bereich der inneren Erweiterung und eine im Bereich des kleinsten Innendurchmessers des äußeren Wellenteiles angeordnet ist.

Bei einer bevorzugten Ausbildung ist eine zwischen dem Lenkgetriebe und dem Bodengelenk einer in der Neigung verstellbaren Lenksäule angeordnete Lenkzwischenwelle zweifach teleskopierbar mit einem rohrförmigen Wellenteil zwischen einem axial an dem Lenkgetriebe festgelegten Wellenteil und einem axial an dem Bodengelenk der in der Neigung verstellbaren Lenksäule ausgebildet. Übertragbar sind die Erfindungsmerkmale auch auf Lenksäulen mit Lenkzwischenwellen, bei denen eine axial teleskopierbare Stufe in einer unteren Zwischenwelle zwischen dem Lenkgetriebe und dem Bodengelenk einer Lenksäule und die andere teleskopierbare Stufe unmittelbar in der Lenksäule ausgebildet ist.

In der Zeichnung ist ein Ausführungsbeispiel der Erfindung dargestellt. Es zeigen:

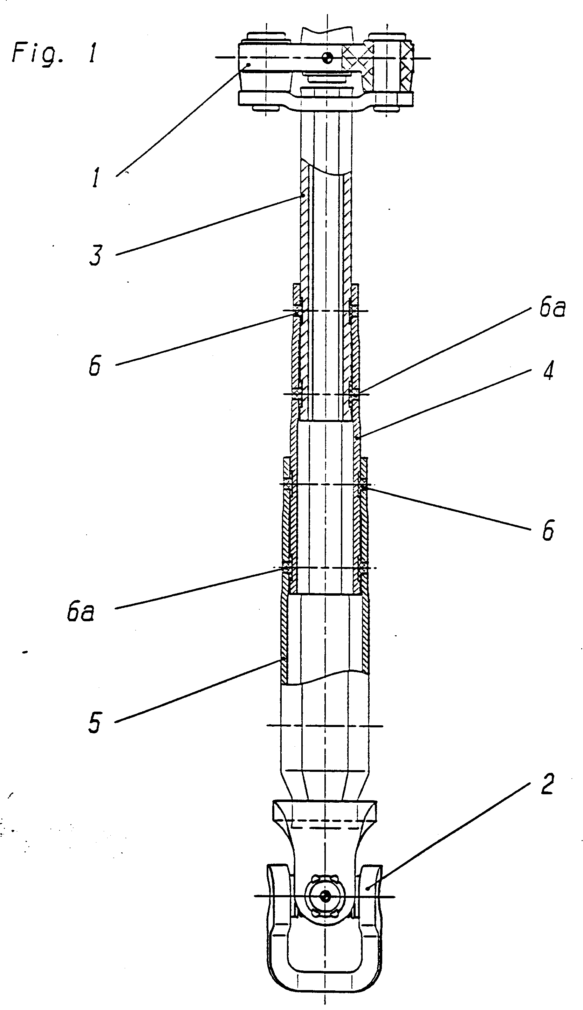

- Figur 1: eine Zwischenwelle eines Kraftfahrzeuges zwischen dem Lenkgetriebe und dem unteren Ende einer Lenksäule, teilweise in Ansicht und teilweise in einer durch die Längsachse gelegten Schnittebene und
- Figur 2: eine im Maßstab gegenüber Figur 1 vergrößerte Darstellung der Wellenteile untereinander in einer durch die Längsachse gelegten Schnittebene.

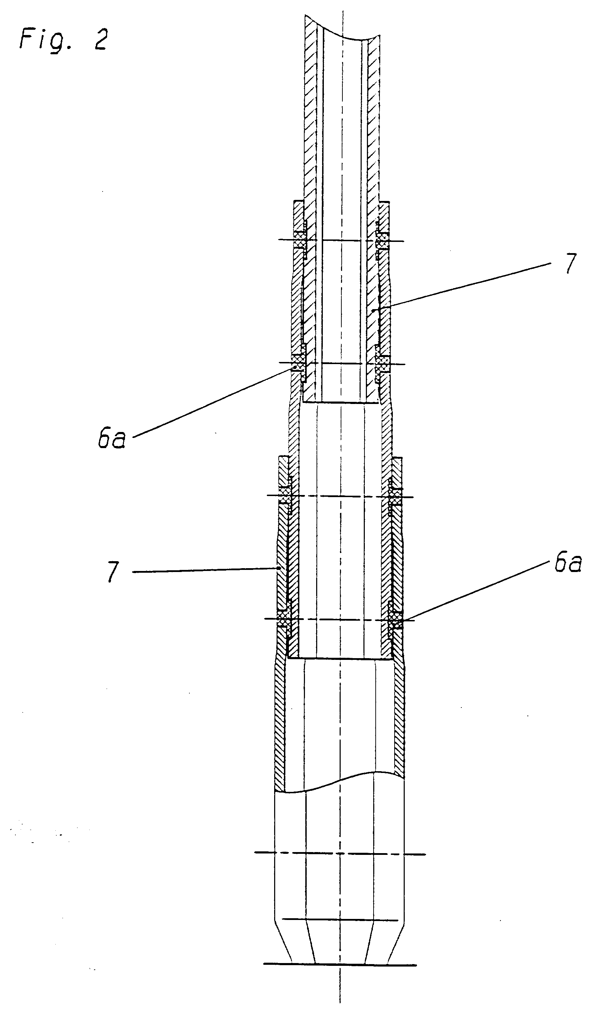

Die als Ausführungsbeispiel dargestellte Zwischenwelle ist am unteren Ende durch ein Kreuzgelenk 1 mit dem nicht dargestellten Lenkgetriebe verbunden. Das obere Ende der Zwischenwelle ist durch ein weiteres Kreuzgelenk 2 mit der Lenkwelle in einer ebenfalls nicht dargestellten Lenksäule verbunden. Die Zwischenwelle besteht aus drei Wellenteilen 3, 4 und 5, von denen das untere Wellenteil 3 mit dem einen Ende axial an dem Kreuzgelenk 1 und das obere Wellenteil 5 mit dem einen Ende axial an dem Kreuzgelenk 2 festgelegt ist. Die beiden anderen Enden der Wellenteile 3 und 5 sind durch ein rohrförmiges Zwischenteil 4 drehfest miteinander verbunden. Erreicht wird dies beispielsweise durch unrunde Querschnitte der einzelnen Wellenteile. Die Übertragung axialer Kräfte wird durch sogenannte Abspritzungen 6 erreicht, welche beispielsweise aus Kunststoff oder einem anderen geeigneten Abscherwerkstoff bestehen und einerseits in Ausnehmungen am Außenumfang des jeweils inneren Wellenteiles und andererseits in Ausnehmungen am Innenumfang des jeweils äußeren Wellenteiles eingreifen, wie es deutlicher aus der Figur 2 hervorgeht. An einer oder auch an mehreren Stellen des Umfanges sind die Ausnehmungen des jeweils äußeren Wellenendes bis zu dessen Außenumfangsfläche durchgeführt, um den Abscherwerkstoff einbringen zu können. Das jeweils äußere Wellenende weist im Bereich des eingreifenden inneren Wellenendes eine sich radial ausdehnende Erweiterung 7 auf, wie sie in der Figur 2 zu erkennen ist. Im Bereich dieser sich radial ausdehnenden Erweiterung 7 liegt auch der auf Abscherung ausgelegte Querschnitt des Abscherwerkstoffes in den Abspritzungen 6. Im Falle des Bruches des Abscherwerkstoffes in den innerhalb dieser Erweiterungen angeordneten Abspritzungen 6a verbleibt an dem jeweils inneren Wellenteil ein radial vorstehender Wulst, der nur im Bereich der radialen Erweiterung des jeweils äußeren Wellenteiles beweglich ist, so daß die Wellenteile axial nicht auseinanderfallen können. Es besteht eine Sicherung besonders des mittleren rohrförmigen Wellenteiles 4, so daß dieses gegen eine die axiale Unterbrechung der Zwischenwelle auslösende Verschiebung gesichert ist.

### BEZUGSZEICHENLISTE:

- 1: Kreuzgelenk
- 2: Kreuzgelenk
- 3: Wellenteil
- 4: Wellenteil
- 5: Wellenteil
- 6: Abspritzung
- 6a: Abspritzung
- 7: Erweiterung

## Patentansprüche

1. Sicherheitssystem für Lenkwellen, bei dem Wellenteile (3, 4, 5) drehfest ineinandergreifen und durch eingespritzte, aufmaximale Axialkräfte in der Lenkwelle ausgelegte **Abspritzungen (6) aus** Abscherwerkstoffen, die in Ausnehmungen am Außenumfang des inneren Wellenteiles und am Innenumfang des äußeren Wellenteiles gleichermaßen eingreifen, gegen axiale Verschiebung relativ zueinander gesichert sind, dadurch gekennzeichnet, daß
ein wenigstens zweifach teleskopierbares Wellensystem vorgesehen ist, bei dem wenigstens zwei Wellenteile (3,5) axial durch ein Zwischenwellenteil (4) miteinander verbunden sind und die jeweils inneren Wellenteile in eine radiale Erweiterung (7) des jeweils zugehörigen äußeren Wellenteiles eingreifen und ein auf Abscherung ausgelegter Querschnitt des Abscherwerkstoffes zwischen beiden Wellenteilen im Bereich der Erweiterung (7) angeordnet ist.

2. Sicherheitssystem nach Anspruch 1, dadurch gekennzeichnet, daß die ineinandergreifenden Wellenteile axial mit einem Abstand voneinander mehrere Verbindungen durch Abspritzungen Abscherwerkstoffen (6) aufweist, von denen eine Verbindung im Bereich der inneren Erweiterung (7) und eine im Bereich des kleinsten Innendurchmessers des äußeren Wellenteiles angeordnet ist.

3. Sicherheitssystem nach den Ansprüchen 1 und 2, dadurch gekennzeichnet, daß eine zwischen dem Lenkgetriebe und dem Bodengelenk einer in der Neigung verstellbaren Lenksäule angeordnete Lenkzwischenwelle zweifach teleskopierbar mit einem rohrförmigen Zwischenwellenteil (4) zwischen einem axial an dem Lenkgetriebe festgelegten Wellenteil und einem axial an dem Bodengelenk der in der Neigung verstellbaren Lenksäule festgelegten Wellenteil (5) ausgebildet ist.

## Claims

1. Safety system for steering shafts, in which the shaft parts (3, 4, 5) engage in one another in a non-rotational manner and are secured against axial displacement relative to one another by snap-off elements (6) made of shearing materials, which are designed for maximum axial forces in the steering shaft and engage equally in recesses on the outer circumference of the inner shaft part and on the inner circumference of the outer shaft part, characterised in that a shaft system is provided, which can be telescoped in at least two parts and in which at least two shaft parts (3, 5) are connected to one another axially by an intermediate shaft part (4) and the respective inner shaft parts engage in a radial extension (7) of the respective, associated outer shaft part and a cross section of the shearing material designed for shearing is arranged between both shaft parts in the region of the extension (7).

2. Safety system according to claim 1, characterised in that the shaft parts engaging in one another comprise a plurality of connections formed by snap-off elements made of shearing materials (6) spaced axially apart from one another, of which one connection is arranged in the region of the inner extension (7) and one in the region of the smallest internal diameter of the outer shaft part.

3. Safety system according to claims 1 and 2, characterised in that an intermediate steering shaft arranged between the steering gearing and the floor joint of a steering column adjustable in its inclination is constructed so it can be telescoped in two parts with a tubular intermediate shaft part (4) between a shaft part fixed axially to the steering gearing and a shaft part (5) fixed axially to the floor joint of the steering column adjustable in its inclination.

## Revendications

1. Système de sécurité pour des arbres de direction dans lesquels des portions d'arbres (3, 4, 5) sont en prise les unes dans les autres de manière fixe en rotation et sont assurées contre un déplacement relatif axial les unes par rapport aux autres par des organes injectés (6) de sécurité qui sont réalisés en des matériaux susceptibles de rupture par cisaillement, injectés et dimensionnés pour des forces axiales maximales pouvant agir sur l'arbre de direction, les organes injectés de sécurité (6) étant en prise de manière égale avec des évidements situés sur le pourtour extérieur de la portion d'arbre interne et sur le pourtour intérieur de la portion d'arbre externe, caractérisé en ce qu'il est prévu un système d'arbre au moins doublement télescopique dans lequel au moins deux portions d'arbres (3, 5) sont reliées axialement l'une à l'autre par une portion d'arbre intermédiaire (4), et dans lequel les portions d'arbre internes sont respectivement en prise avec une portion élargie radiale (7) de la portion d'arbre externe respectivement associée, et une section transversale du matériau susceptible de rupture par cisaillement, dimensionnée pour une rupture par cisaillement est agencée entre les deux portions d'arbre dans la zone de la portion élargie (7).

2. Système de sécurité selon la revendication 1, caractérisé en ce que les portions d'arbre qui sont en prise l'une dans l'autre présentent plusieurs liaisons espacées axialement les unes des autres et réalisées par des organes injectés de sécurité (6) réalisés en des matériaux susceptibles de rupture par cisaillement, une des liaisons étant disposée dans la zone de la portion élargie interne (7), et une des liaisons dans la zone du diamètre interne le plus petit de la portion d'arbre externe.

3. Système de sécurité selon la revendication 1 et 2, caractérisé en ce qu'un arbre intermédiaire de direction agencé entre le mécanisme de direction et l'articulation de fond d'une colonne de direction réglable en inclinaison est réalisé de façon doublement télescopique avec une portion d'arbre intermédiaire (4) en forme de tube, disposée entre une portion d'arbre fixée axialement au mécanisme de direction et une portion d'arbre (5) fixée axialement à l'articulation de fond de la colonne de direction réglable en inclinaison.
